(19) **Europäisches Patentamt / European Patent Office / Office européen des brevets**

(11) **EP 4 631 608 A1**

(12) **EUROPEAN PATENT APPLICATION**
published in accordance with Art. 153(4) EPC

(43) Date of publication:
**15.10.2025 Bulletin 2025/42**

(21) Application number: **23900678.6**

(22) Date of filing: **06.12.2023**

(51) International Patent Classification (IPC):
**B01D 65/00** $^{(2006.01)}$  **B01D 69/02** $^{(2006.01)}$
**B01D 69/10** $^{(2006.01)}$  **B01D 69/12** $^{(2006.01)}$
**B01D 71/56** $^{(2006.01)}$

(52) Cooperative Patent Classification (CPC):
**B01D 65/00; B01D 69/02; B01D 69/10;
B01D 69/12; B01D 71/56;** Y02A 20/131

(86) International application number:
**PCT/JP2023/043587**

(87) International publication number:
**WO 2024/122564 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2022 JP 2022195829**

(71) Applicant: **Asahi Kasei Kabushiki Kaisha
Tokyo 1000006 (JP)**

(72) Inventors:
- **KAI, Ryosuke
  Tokyo 100-0006 (JP)**
- **HOTTA, Daisuke
  Tokyo 100-0006 (JP)**

(74) Representative: **D Young & Co LLP
3 Noble Street
London EC2V 7BQ (GB)**

(54) **METHOD FOR REGENERATING SEMIPERMEABLE MEMBRANE**

(57) Provided is a method for regenerating a semipermeable membrane that has a history of contacting a liquid body containing an organic solvent. The method for regenerating a semipermeable membrane comprises bringing the membrane into contact with a regeneration agent. The regeneration agent is selected from liquids at 50°C or higher that contain water and gases at 80°C or higher that contain water.

EP 4 631 608 A1

## Description

FIELD

The present invention relates to a method for regenerating a semi-permeable membrane.

BACKGROUND

Membrane separation is widely employed in a wide variety of technical fields.

Forward osmosis membranes, reverse osmosis membranes, nanofiltration membranes, ultrafiltration membranes and microfiltration membranes, for example, are used for waste water treatment, desalination of seawater, concentration of intermediate compounds and purification of target substances.

In membrane separation using semi-permeable membranes of such types, prolonged continuous operation can reduce the feed solution permeation volume and separation performance of the semi-permeable membrane. In order to obtain desired processing volume and separation performance in membrane separation, therefore, it is necessary not only to increase the initial performance of the membrane used, but also to restore membrane performance that has been reduced during operation, in order to regenerate the membrane.

Several techniques related to regeneration of membrane separation membranes have been proposed in the prior art.

For example, PTLs 1 to 3 disclose techniques in which, while circulating a feed solution to the feed solution side of a forward osmosis membrane module, the circulating liquid on the draw solution side is switched from the draw solution to a wash solution with a lower osmotic pressure than the feed solution, and the difference in osmotic pressure between the wash solution and the feed solution is utilized for backwashing of the forward osmosis membrane.

PTL 4 discloses a technique for washing reverse osmosis membranes and nanofiltration membranes with an iodine compound.

PTL 5 discloses circulating hot water to regenerate a reverse osmosis membrane used for removal of boron from a feed solution to produce ultrapure water.

[CITATION LIST]

[PATENT LITERATURE]

[PTL 1] International Patent Publication No. WO2021/187438
[PTL 2] Japanese Unexamined Patent Publication No. 2021-003663
[PTL 3] Japanese Unexamined Patent Publication No. 2012-250200
[PTL 4] Japanese Unexamined Patent Publication No. 2011-161435
[PTL 5] Japanese Unexamined Patent Publication No. 2018-058018

SUMMARY

[TECHNICAL PROBLEM]

The techniques described in PTLs 1 to 5 relate to means used in membrane separation of a feed solution where water is the solvent, intended to restore reduced performance caused by fouling of a semi-permeable membrane or scaling on the semi-permeable membrane due to the solute and insoluble components in the feed solution.

The present inventors have found, however, that reduced semipermeable membrane performance is sometimes seen even with prolonged continuous operation of membrane separation of a feed solution, in cases where an organic solvent is also present in the solvent. The present inventors further found that the performance reduction in such cases is not restored by prior art methods for regenerating semi-permeable membranes.

The present invention has been completed in light of the circumstances described above.

It is an object of the invention to provide a method for regenerating a semi-permeable membrane having reduced performance due to continuous operation for membrane separation of a feed solution having an organic solvent included in the solvent.

No method has previously been known for regenerating a semi-permeable membrane with reduced performance due to continuous operation during membrane separation of a feed solution when an organic solvent is included in the solvent.

[SOLUTION TO PROBLEM]

The present invention is as follows.

<Aspect 1>

A method for regenerating a semi-permeable membrane, wherein:

the semi-permeable membrane has a contact history with a liquid containing an organic solvent, and
the method comprises contacting the semi-permeable membrane with a regenerating agent,
the regenerating agent being selected from among water-containing liquids at 50°C or above and water-containing gases at 80°C or above.

<Aspect 2>

The method for regenerating a semi-permeable membrane according to aspect 1, wherein the semi-permeable membrane comprises a support membrane and a separation function layer.

<Aspect 3>

The method for regenerating a semi-permeable membrane according to aspect 2, wherein the separation function layer includes a polyamide.

<Aspect 4>

The method for regenerating a semi-permeable membrane according to aspect 1 or 2, wherein the semi-permeable membrane is a forward osmosis membrane.

<Aspect 5>

The method for regenerating a semi-permeable membrane according to aspect 1 or 2, wherein the regenerating agent is steam at 100°C to 140°C.

<Aspect 6>

The method for regenerating a forward osmosis membrane according to aspect 4, wherein the regenerating agent is steam at 100°C to 140°C.

<Aspect 7>

The method for regenerating a semi-permeable membrane according to aspect 1 or 2, wherein the regenerating agent is water at 70°C to 100°C.

<Aspect 8>

The method for regenerating a forward osmosis membrane according to aspect 4, wherein the regenerating agent is water at 70°C to 100°C.

<Aspect 9>

The method for regenerating a semi-permeable membrane according to aspect 1, wherein the contact time between the semi-permeable membrane and regenerating agent is 2 minutes to 10 hours.

<Aspect 10>

The method for regenerating a semi-permeable membrane according to aspect 5, wherein the contact time between the semi-permeable membrane and regenerating agent is 2 minutes to 10 hours.

<Aspect 11>

The method for regenerating a semi-permeable membrane according to aspect 6, wherein the contact time between the semi-permeable membrane and regenerating agent is 2 minutes to 10 hours.

<Aspect 12>

The method for regenerating a semi-permeable membrane according to aspect 1 or 2, wherein the organic solvent in the liquid is a hydrophilic organic solvent.

<Aspect 13>

The method for regenerating a semi-permeable membrane according to aspect 12, wherein the liquid is an aqueous solution containing a hydrophilic organic solvent, the concentration of the hydrophilic organic solvent in the liquid being 20% by weight or greater based on the total weight of the liquid.

<Aspect 14>

The method for regenerating a semi-permeable membrane according to aspect 1 or 2, wherein the method includes contacting the semi-permeable membrane with water at below 50°C before contacting the semi-permeable membrane with the regenerating agent.

<Aspect 15>

The method for regenerating a semi-permeable membrane according to aspect 1 or 2, wherein the semi-permeable membrane has a contact history with a treatment agent selected from among water-containing liquids at 50°C or above and water-containing gases at 80°C or above, before contact with the liquid.

<Aspect 16>

The method for regenerating a semi-permeable membrane according to aspect 1 or 2, wherein:

the semi-permeable membrane is a forward osmosis membrane, and
when water is placed on one side of the forward osmosis membrane while a 3.5 weight% aqueous sodium chloride solution is placed on the other side, and forward osmosis treatment is carried out, the forward osmosis performance value (F/R) as the ratio between reverse salt diffusion (R, units: $g/(m^2 \times hr)$) and permeation volume (F, units: $kg/(m^2 \times hr)$) is 0.90 times or less compared to the forward osmosis performance value ($F_0/R_0$) when the semi-permeable membrane does not have a contact history with the liquid.

<Aspect 17>

The method for regenerating a semi-permeable membrane according to aspect 1 or 2, wherein:

the semi-permeable membrane is a forward osmosis membrane, and
when water is placed on one side of the forward osmosis membrane that has been regenerated by the regeneration method, while a 3.5 weight% aqueous sodium chloride solution is placed on the other side, and forward osmosis treatment is carried out, the forward osmosis performance value (F/R) as the ratio between reverse salt diffusion (R, units: $g/(m^2 \times hr)$) and permeation volume (F, units: $kg/(m^2 \times hr)$) is 0.85 times or greater compared to the forward osmosis performance value ($F_0/R_0$) when the semi-permeable membrane does not have a contact history with the liquid.

<Aspect 18>

A method for regenerating a semi-permeable membrane, wherein the method comprises:

an organic solvent removal step in which the organic solvent is removed from the liquid containing an organic solvent through a semi-permeable membrane, and
after the organic solvent removal step, a regeneration step in which the semi-permeable membrane is contacted with a regenerating agent,
the regenerating agent being selected from among water-containing liquids at 50°C or above and water-containing gases at 80°C or above.

<Aspect 19>

The method for regenerating a semi-permeable membrane according to aspect 18, wherein the semi-permeable membrane comprises a support membrane and a separation function layer.

<Aspect 20>

The method for regenerating a semi-permeable membrane according to aspect 19, wherein the separation function layer includes a polyamide.

<Aspect 21>

The method for regenerating a semi-permeable membrane according to aspect 18 or 19, wherein the semi-permeable membrane is a forward osmosis membrane.

<Aspect 22>

The method for regenerating a semi-permeable membrane according to any one of aspects 18 to 21, wherein the regenerating agent is steam at 100°C to 140°C.

[ADVANTAGEOUS EFFECTS OF INVENTION]

The present invention provides a method for regenerating a semi-permeable membrane having reduced performance due to continuous operation for membrane separation of a feed solution which has an organic solvent included in the solvent.

DESCRIPTION OF EMBODIMENTS

Embodiments for carrying out the invention (hereunder referred to simply as "embodiments") will now be described in detail, with the understanding that the invention is not limited to the embodiments. The invention may incorporate various modifications without falling outside of the scope of its gist.

A method for regenerating a semi-permeable membrane according to the first embodiment is a method wherein:

the semi-permeable membrane to be regenerated has a contact history with a liquid containing an organic solvent, and
the method for regenerating a semi-permeable membrane comprises contacting the semi-permeable membrane with a regenerating agent,
the regenerating agent being selected from among water-containing liquids at 50°C or above and water-containing gases at 80°C or above.

The method for regenerating a semi-permeable membrane according to a second embodiment is a method for regenerating a semi-permeable membrane comprising:

an organic solvent removal step in which the organic solvent is removed from the liquid containing an organic solvent through a semi-permeable membrane, and
after the organic solvent removal step, a regeneration step in which the semi-permeable membrane is contacted with a regenerating agent,
the regenerating agent being selected from among water-containing liquids at 50°C or above and water-containing gases at 80°C or above.

The method for regenerating a semi-permeable membrane according to the first and second embodiments described above may have their steps or constituent elements interchanged, or the steps or constituent elements of both embodiments may be combined. The constituent elements and steps common to both embodiments, as well as the preferred constituent elements and steps for both embodiments, are described below.

The method for regenerating a semi-permeable membrane may also include washing pretreatment in which the semi-permeable membrane is contacted with water at below 50°C, before contacting the semi-permeable membrane with the regenerating agent.

The semi-permeable membrane for which the method for regenerating a semi-permeable membrane is applied is, for example, a semi-permeable membrane having reduced performance due to continuous operation for membrane separation of a feed solution which has an organic solvent included in the solvent. In this type of membrane separation, the membrane performance can potentially be reduced when the semi-permeable membrane contacts with the organic solvent and the interaction causes "relaxation" of the molecular structure of the semi-permeable membrane. For example, solvation by the organic solvent in the separation function layers of the semi-permeable membrane may result in swelling of the separation function layers, leading to reduced membrane performance.

It is possible that the semi-permeable membrane is regenerated by this embodiment because when the semi-permeable membrane that has reduced membrane performance due to contact with an organic solvent contacts with a regenerating agent selected from among water-containing liquids at 50°C or above and water-containing gases at 80°C or above, thus removing the organic solvent in the semi-permeable membrane, the molecular structure of the semi-permeable membrane is concomitantly stabilized.

However, the present invention is not to be constrained by this interpretation.

<Semi-permeable membrane>

The semi-permeable membrane to which the regenerating method of the embodiment is applied may be one whose molecular structure "relaxes" when contacted with an organic solvent. The semi-permeable membrane may therefore have at least a partial section composed of an organic material.

Examples of organic materials to form a partial section of the semi-permeable membrane of the embodiment include polyolefins, polysulfone, polyethersulfone, cellulose acetate, polyacrylonitrile, polyacrylic acid esters, polymethacrylic acid esters, polyesters, polyamides, ceramics and fluorine-based resins, and the organic material may be selected as any one or more of these.

The semi-permeable membrane of the embodiment may be a semi-permeable membrane comprising a support membrane and a separation function layer. The separation function layer does not need to be set directly on the support membrane so long as it is on the semi-permeable membrane surface that can contact with steam, or it may be set directly on the support membrane. The semi-permeable membrane may consist of the support membrane and the separation function layer, or a separation function layer may be situated on one or both sides of the support membrane, or a single layer or multiple layers may be present between the support membrane and separation function layer.

Examples of materials to form the support membrane include polyethersulfone, polysulfone, polyketone, polyetherether ketone, polyphenylene ether, polyvinylidene fluoride, polyacrylonitrile, polyimine, polyimide, polybenzooxazole, polybenzimidazole, sulfonated tetrafluoroethylene and polyamide, with the material preferably being one or more selected from the group consisting of these.

The separation function layer preferably includes a polyamide, and more preferably consists of a polyamide. A separation function layer consisting of a polyamide can be formed, for example, by interfacial polymerization between a polyfunctional acid halide and a polyfunctional aromatic amine on the support membrane, or by positioning a separation function layer consisting of a polyamide to be on the semi-permeable membrane surface.

A polyfunctional aromatic acid halide is an aromatic acid halide having two or more acid halide groups in the molecule. Specific compounds include trimesoyl halide, trimellitic acid halide, isophthalic acid halide, terephthalic acid halide, pyromellitic acid halide, benzophenonetetracarboxylic acid halide, biphenyldicarboxylic acid halide, naphthalenedicarboxylic acid halide, pyridinedicarboxylic acid halide and benzenedisulfonic acid halide, any of which may be used alone or as mixtures. The halide ions of these aromatic acid halides may be chloride ion, bromide ion or iodide ion, for example. According to the embodiment it is particularly preferred to use trimesoyl chloride alone, or a mixture of trimesoyl chloride and isophthalic acid chloride, or a mixture of trimesoyl chloride and terephthalic acid chloride.

A polyfunctional aromatic amine is an aromatic amino compound having two or more amino groups in the molecule. Specific examples include m-phenylenediamine, p-phenylenediamine, 3,3'-diaminodiphenylmethane, 4,4'-diaminodiphenylamine, 4,4'-diaminodiphenyl ether, 3,4-diaminodiphenyl ether, 3,3'-diaminodiphenylamine, 3,5-diaminobenzoic acid, 4,4'-diaminodiphenylsulfone, 3,3'-diaminodiphenylsulfone, 3,4'-diaminodiphenylsulfone, 1,3,5-triaminobenzene and 1,5-diaminonaphthalene, any of which may be used alone or as mixtures. For this embodiment it is particularly preferred to use either or both m-phenylenediamine and p-phenylenediamine.

The interfacial polymerization between the polyfunctional acid halide and the polyfunctional aromatic amine can be carried out by an established method.

The semi-permeable membrane to which the regenerating method of the embodiment is to be applied may have a contact history with a treatment agent selected from among water-containing liquids at 50°C or above and water-containing gases at 80°C or above, before contact with the liquid containing an organic solvent.

If the semi-permeable membrane has a contact history with such a treatment agent, the molecular structure will be less likely to relax when contacted with the liquid containing an organic solvent, thus reducing the required frequency for carrying out the regenerating method of the embodiment. This is especially advantageous when the semi-permeable membrane comprises a support membrane and a separation function layer on the support membrane, as contact with the treatment agent renders the molecular structure of the separation function layer more rigid.

When the semi-permeable membrane does not have a contact history with the treatment agent, application of the regenerating method of the embodiment may improve the membrane performance of the semi-permeable membrane above its initial performance.

The semi-permeable membrane to which the regenerating method of the embodiment is applied may be, for example, a microfiltration membrane, ultrafiltration membrane, nanofiltration membrane, reverse osmosis membrane or forward osmosis membrane, and especially a forward osmosis membrane.

The semi-permeable membrane may have any structural shape, such as a hollow fiber membrane shape, a tubular shape or a flat sheet membrane shape.

For this embodiment, the semi-permeable membrane may be in the form of a membrane module comprising a plurality of semi-permeable membranes housed in an appropriate housing.

<Liquid containing an organic solvent>

The semi-permeable membrane to which the regenerating method of the embodiment is applied has a contact history with a liquid containing an organic solvent. That is, the semi-permeable membrane to which the regenerating method of the embodiment is applied is a semi-permeable membrane that has been used for membrane separation of a feed solution containing an organic solvent as at least part of the solvent.

The organic solvent in the liquid may be one or more compounds selected from among aliphatic hydrocarbons, aromatic hydrocarbons, ketones, ethers, alcohols, carboxylic acids, aldehydes, nitrile compounds, amide compounds, halogenated hydrocarbons, sulfoxide compounds and ester compounds, for example.

Examples of aliphatic hydrocarbons include propane, butane, pentane, hexane, heptane, octane, decane, undecane and cyclooctane;

examples of aromatic hydrocarbons include benzene, toluene, xylene, biphenyl, pyridine and pyrrole;
examples of ketones include acetone, methyl ethyl ketone, diethyl ketone, methyl propyl ketone, methyl isobutyl ketone, methyl amyl ketone, cyclohexanone, acetophenone and benzophenone;
examples of ethers include dimethyl ether, ethylmethyl ether, diethyl ether, diphenyl ether, ethylene oxide, tetrahydrofuran, 1,4-dioxane and anisole;
examples of alcohols include methanol, ethanol, 1-propanol, 2-propanol, ethylene glycol and glycerol;
examples of carboxylic acids include acetic acid and trifluoroacetic acid;
examples of aldehydes include formaldehyde, acetaldehyde, propionaldehyde and benzaldehyde;
examples of nitrile compounds include acetonitrile and propionitrile;
examples of amide compounds include dimethylformamide;
examples of halogenated hydrocarbons include chlorobenzene, dichloromethane and 1,1,1-trichloroethane;
examples of sulfoxide compounds includes dimethyl sulfoxide; and
examples of ester compounds include ethyl acetate.

The organic solvent in the liquid may also be a hydrophilic organic solvent. A hydrophilic solvent may be one or more selected from among alcohols and nitrile compounds of 1 to 3 carbon atoms, and specifically one or more selected from among methanol, ethanol, 1-propanol, 2-propanol and acetonitrile.

The liquid may also be an aqueous solution containing a hydrophilic organic solvent. In this case the content ratio of the hydrophilic organic solvent in the liquid may be 1% by weight (i.e., weight %) or greater, or 5 weight%, 10 weight%, 20 weight%, 40 weight% or 50 weight% or greater, with respect to the total weight of the liquid. If the content ratio of the hydrophilic organic solvent in the liquid is 5 weight% or greater, the semipermeable membrane performance will be more likely reduced, allowing the effect of applying the present regenerating method to be exhibited to a greater degree. The content ratio of the hydrophilic organic solvent in the liquid may also be lower than 100 weight%, or 95 weight% or lower, 90 weight% or lower, 85 weight% or lower or 80 weight% or lower.

<Extent of performance degradation>

The semi-permeable membrane used in the regenerating method of the embodiment is one that has undergone reduction in membrane performance due to having contacted a liquid containing an organic solvent.

When the semi-permeable membrane is a forward osmosis membrane, the extent of reduction in membrane performance can be estimated by the forward osmosis performance value (F/R), as the ratio between the reverse salt diffusion (R, units: $g/(m^2 \times hr)$) and the permeation volume (F, units: $kg/(m^2 \times hr)$).

Specifically, the effect of the invention is exhibited most advantageously if, when water is placed on one side of the forward osmosis membrane (semi-permeable membrane) while a 3.5 weight% aqueous sodium chloride solution is placed on the other side, and forward osmosis treatment is carried out, the forward osmosis performance value (F/R) as the ratio between reverse salt diffusion (R, units: $g/(m^2 \times hr)$) and permeation volume (F, units: $kg/(m^2 \times hr)$) is 0.90 times or less compared to the forward osmosis performance value ($F_0/R_0$) when the semi-permeable membrane does not have a contact history with the liquid (the initial forward osmosis performance value). The advantage of the invention can be even more effectively exhibited if the forward osmosis performance value (F/R) is 0.80 times or less, 0.70 times or less, 0.60 times or less, 0.50 times or less, 0.40 times or less, 0.30 times or less or 0.25 times or less, compared to the initial forward osmosis performance value ($F_0/R_0$).

In the semi-permeable membrane used in the regenerating method of the embodiment, the forward osmosis performance value (F/R) may also be 0.10 times or greater or 0.20 times or greater compared to the initial forward osmosis performance value ($F_0/R_0$).

<Washing pretreatment>

The regenerating method of the embodiment comprises contacting at least one type of regenerating agent selected from among water-containing liquids at 50°C or above and water-containing gases at 80°C or above, with a semi-permeable membrane that has reduced membrane performance due to having had contact with a liquid containing an organic solvent. Preferably, the semi-permeable membrane with reduced membrane performance is contacted with a regenerating agent selected from among water-containing liquids at 50°C or above and water-containing gases at 80°C or above.

In the regenerating method of the embodiment, however, washing pretreatment, in which the semi-permeable membrane is contacted with water at below 50°C, may be carried out before contacting the semi-permeable membrane with the regenerating agent.

By carrying out washing pretreatment in the regenerating method of the embodiment it is possible to more easily remove the organic solvent from the semi-permeable membrane.

The temperature of the water during washing pretreatment may be 45°C or lower, 40°C or lower or 30°C or lower, and 0°C or higher, 10°C or higher or 15°C or higher, and will typically be room temperature.

Contact between the semi-permeable membrane and water in the washing pretreatment may be a dipping method in which the semi-permeable membrane is dipped in water, a forward flushing method in which water is passed from the feed solution side to the opposite side of the semi-permeable membrane, or a backwashing method in which water is passed from the side opposite the feed solution side to the feed solution side of the semi-permeable membrane, and alternatively any two or all of these methods may also be used in succession.

The washing pretreatment time may be 10 minutes or longer, 30 minutes or longer or 1 hour or longer, and 24 hours or less, 12 hours or less, 8 hours or less, 6 hours or less, 4 hours or less or 2 hours or less. When two or all of the methods among dipping, forward flushing and backwashing are carried out, the washing pretreatment time is the time for each method of dipping, forward flushing and backwashing.

In the regenerating method of the embodiment, the semi-permeable membrane may be dried by flowing dry air over it, before contacting the semi-permeable membrane with the regenerating agent.

<Regenerating agent>

The regenerating method of the embodiment comprises contacting a regenerating agent selected from among water-containing liquids at 50°C or above and water-containing gases at 80°C or above, with a semi-permeable membrane that has reduced membrane performance due to having had contact with a liquid containing an organic solvent. Typically, the semi-permeable membrane with reduced membrane performance may be contacted with a regenerating agent selected from among water-containing liquids at 50°C or above and water-containing gases at 80°C or above.

Since one purpose of the regeneration method of the invention is to remove organic solvent from the semi-permeable membrane, water-containing liquid used as the regenerating agent does not need to contain an organic solvent. However the water-containing liquid may also include a solute. Examples of solutes include sodium chloride, magnesium chloride and chlorine.

The water-containing liquid may therefore be water or an aqueous solution containing such a solute.

From the viewpoint of facilitating removal of the solute used during regeneration after the membrane has been regenerated according to the invention, the conductivity of the water-containing liquid may be 500 $\mu$S/cm or lower, and preferably the water used has purity at or above that of purified water according to the Japanese Pharmacopoeia.

From the viewpoint of removing organic solvent in the semi-permeable membrane and effectively stabilizing the molecular structure of the semi-permeable membrane, the temperature of the water-containing liquid used as the regenerating agent may be 50°C or higher, 60°C or higher, 70°C or higher, 80°C or higher, 90°C or higher, 95°C or higher or 100°C or higher.

When considering thermal efficiency for heating of the liquid, the temperature of the liquid may be 140°C or lower, 130°C or lower, 120°C or lower, 110°C or lower or 100°C or lower. The temperature of the liquid may be at or below the boiling point of the liquid. The boiling point of the liquid may vary depending on the amount of solute in the liquid, and on the pressure.

Contact between the semi-permeable membrane and the water-containing liquid may be a dipping method in which the semi-permeable membrane is dipped in the liquid, a forward flushing method in which the liquid is passed from the feed solution side to the opposite side of the semi-permeable membrane, or a backwashing method in which the liquid is passed from the side opposite the feed solution side to the feed solution side of the semi-permeable membrane, and alternatively any two or all of these methods may also be used in succession.

The contact time between the semi-permeable membrane and the water-containing liquid may be 30 minutes or longer, 45 minutes or longer, 1 hour or longer or 2 hours or longer, and 24 hours or less, 12 hours or less, 8 hours or less, 6 hours or less or 4 hours or less. When two or all of the methods among dipping, forward flushing and backwashing are carried out, the contact time is the time for each method of dipping, forward flushing and backwashing.

The type of water-containing gas used as the regenerating agent is not particularly restricted but is preferably steam from the viewpoint of management ease.

The temperature of the water-containing gas used as the regenerating agent may be 80°C or higher, 90°C or higher, 100°C or higher, higher than 100°C, 110°C or higher or 120°C or higher, from the viewpoint of removing the organic solvent in the semi-permeable membrane and effectively stabilizing the molecular structure of the semi-permeable membrane, and it may be 150°C or lower, 140°C or lower, 135°C or lower, 130°C or lower or 125°C or lower, from the viewpoint of thermal efficiency during heating.

The water-containing gas as the regenerating agent is preferably superheated steam at a temperature of higher than 100°C from the viewpoint of regeneration efficiency for the semi-permeable membrane.

Contact between the semi-permeable membrane and the water-containing gas may be a static diffusion method in which the semi-permeable membrane is placed in a sealed container and gas is supplied into the container and allowed to stand, a forward flushing method in which the gas is passed from the feed solution side to the opposite side of the semi-permeable membrane, or a backwashing method in which the gas is passed from the side opposite the feed solution side to the feed solution side of the semi-permeable membrane, and alternatively any two or all of these methods may also be used in succession.

The contact time between the semi-permeable membrane and the water-containing gas may be 2 minutes or longer, 5 minutes or longer, 10 minutes or longer, 20 minutes or longer, 30 minutes or longer or 45 minutes or longer, and 10 hours or less, 8 hours or less, 6 hours or less, 4 hours or less or 2 hours or less. When two or all of the methods among static diffusion, forward flushing and backwashing are carried out, the contact time is the time for each method of static diffusion, forward flushing and backwashing.

<Effect of the invention (extent of performance recovery)>

The semi-permeable membrane that has reduced membrane performance due to having contacted with a liquid containing an organic solvent recovers its membrane performance when the method for regenerating of the invention is applied.

In the method of the invention, when the semi-permeable membrane is a forward osmosis membrane, it is possible to achieve an extent of recovery of membrane performance such that the forward osmosis performance value (F/R) after recovery is 0.85 times or greater compared to the .forward osmosis performance value ($F_0/R_0$) when the semi-permeable membrane does not have a contact history with a liquid containing an organic solvent (initial forward osmosis performance value).

With the regeneration method of the invention it is also possible to achieve a forward osmosis performance value (F/R) after regeneration of 0.90 times or greater, 0.95 times or greater, 0.98 times or greater or 0.99 times or greater, or even 1.00 times, compared to the initial forward osmosis performance value ($F_0/R_0$).

Moreover as explained above, when the semi-permeable membrane does not have a contact history with a treatment agent selected from among water-containing liquids at 50°C or above and water-containing gases at 80°C or above before the semi-permeable membrane contacts with the liquid containing an organic solvent, application of the regeneration method of the invention may improve membrane performance of the semi-permeable membrane above its initial performance. In this case the forward osmosis performance value (F/R) after regeneration may be greater than 1.00 times and about 1.20 times or less, compared to the initial forward osmosis performance value ($F_0/R_0$).

EXAMPLES

In the following Examples and Comparative Examples, measurement of the permeation volume (F) and reverse salt diffusion (R), and contact between the hollow fiber forward osmosis membrane module and the liquid containing an organic solvent, were each carried out in the following manner.

<Measurement of permeation volume (F) and reverse salt diffusion (R) (performance evaluation)>

In the Examples and Comparative Examples, the permeation volume (F) and reverse salt diffusion (R) were each measured for the hollow fiber forward osmosis membrane modules produced by the method described above, the modules after contacting with a liquid containing an organic solvent by the method described below, and the modules after regenerating treatment by the respective methods in the Examples and Comparative Examples.
The permeation volume (F) and reverse salt diffusion (R) were each calculated by the following mathematical formulas (1) and (2):

$$F = L/(M \times H) \qquad (1)$$

{where L is the amount of water (kg) that has permeated the forward osmosis membrane, M is the effective surface area (m$^2$) of the forward osmosis membrane, and H is time (hr)},

$$R = G/(M \times H) \qquad (2)$$

{where G is the amount of salt (kg) that has permeated the forward osmosis membrane, M is the effective surface area (m$^2$) of the forward osmosis membrane, and H is time (hr)}.
The forward osmosis performance value (F/R), as the ratio of the permeation volume (F) to reverse salt diffusion (R), was used as an index of forward osmosis performance.
A larger forward osmosis performance value (F/R) may be assumed to represent a forward osmosis membrane module with superior forward osmosis performance.
In the Examples and Comparative Examples it was also examined to what extent the modules that had reduced forward osmosis performance value (F/R) due to contact with an organic solvent approached the initial forward osmosis performance value (F/R) as a result of regenerating treatment.
Measurement of the permeation volume (F) and reverse salt diffusion (R) of each module was carried out under the following conditions.
Purified water was used as the feed solution and a 3.5 weight% aqueous sodium chloride solution was used as the draw solution.
With the feed solution in the space inside the hollow fibers of the forward osmosis membrane module (the separation function layer side) and the draw solution in the space on the outside, each was caused to circulate in a cyclical manner so that the directions of flow of both solutions were in parallel, and after increasing the pressure to 20 kPaG with the draw solution side as the pressurization side, forward osmosis treatment was carried out for 20 minutes. The sodium chloride concentration of the draw solution was monitored during this time, with dropwise addition of saturated aqueous sodium chloride as appropriate to maintain a constant sodium chloride concentration in the draw solution.
The temperatures of the feed solution and draw solution were both 25°C, and the linear speeds of the feed solution and draw solution at the hollow fiber membrane surface were both 3.0 cm/sec.

<Contact between hollow fiber forward osmosis membrane module and liquid containing an organic solvent>

The following were used as liquids containing organic solvents:

15 weight% acetonitrile aqueous solution (15% MeCN)
50 weight% acetonitrile aqueous solution (50% MeCN)
Ethanol (EtOH)
Toluene (Toluene)
Ethyl acetate (Ethyl Acetate)

The acetonitrile used was a 99.5% purity product by FujiFilm-Wako Pure Chemical Industries, the ethanol used was a 99.5% purity product by FujiFilm-Wako Pure Chemical Industries, the toluene used was a 99.5% product by FujiFilm-Wako Pure Chemical Industries and the ethyl acetate used was a 99.5% product by FujiFilm-Wako Pure Chemical Industries. The solvent (water) used for the aqueous solution was purified water.

Both the inside space and outside space of the hollow fibers in the forward osmosis membrane module were filled with the liquid containing an organic solvent, and contact treatment was carried out while left still for 168 hours at 25°C.

The module was then held with the axial direction oriented essentially vertically, and after removing the organic solvent-containing liquid by natural gravity from the liquid outlet/inlet port at the lower end of the module, water was circulated through both the inside space and outside space of the hollow fibers in the forward osmosis membrane module for water washing of the forward osmosis membrane.

The washed module was provided for measurement of the permeation volume (F) and reverse salt diffusion R.

<Example 1>

The forward osmosis membrane housed in a hollow fiber forward osmosis membrane module for Example 1 was a forward osmosis membrane with a polysulfone (PSf) hollow fiber membrane as the hollow fiber porous support membrane, and having a polyamide separation function layer on the inside surface of the hollow fiber membrane.

The hollow fiber forward osmosis membrane module of Example 1 was produced in the following manner.

<Production of hollow fiber porous support membrane>

A homogeneous polymer solution (spinning feed solution) comprising 19 weight% polysulfone (Udel-P3500 by Solvay Specialty polymers), 61 weight% N-methyl-2-pyrrolidone (FujiFilm-Wako Pure Chemical Industries) and 20 weight% tetraethylene glycol (Tokyo Chemical Industry Co., Ltd.) was prepared as a spinning feed solution. The spinning feed solution was filled into a wet hollow fiber spinning machine equipped with a dual spinneret. The spinning feed solution was discharged from the outer spinneret of the dual spinneret while the internal coagulating solution (water) was discharged from the inner spinneret, and these were guided into a coagulating bath filled with water as an external coagulating solution for solidification, to obtain a hollow fiber filamentous porous support membrane.

The outer diameter of the obtained hollow fiber filamentous porous support membrane was 1.00 mm, the inner diameter was 0.60 mm and the membrane thickness was 0.20 mm.

<Production of support membrane module>

After housing 130 of the hollow fiber filamentous porous support membranes each cut to a length of 120 mm in a 20 mm-diameter synthetic resin cylindrical housing, both ends were anchored with an adhesive without obstructing the hollow sections of the hollow fibers, to produce a support membrane module with an effective length of 80 mm and an effective membrane inner surface area of 0.02 m$^2$.

The space inside the support membrane module was divided into two sections by the hollow fiber membrane walls, the two spaces being blocked from flow except for allowing movement of liquid through the membrane walls. The housing had a liquid outlet/inlet port (liquid inlet port and liquid outlet port) allowing communication with the space inside the hollow fibers, and a liquid outlet/inlet port (liquid inlet port and liquid outlet port) allowing communication with the space outside the hollow fibers.

<Production of hollow fiber forward osmosis membrane module (formation of separation function layer)>

An aqueous solution (first solution) containing 1.9 weight% m-phenylenediamine and 0.15 weight% sodium lauryl sulfate was passed through the space inside the hollow fibers of the obtained support membrane module, for 20 minutes at a flow rate of 130 mL/min. After completion of the liquid flow, the support membrane module was held with the axial direction of the support membrane module oriented essentially vertically, and the first solution was removed by natural gravity from the liquid outlet/inlet port at the lower end of the module.

The space on the outside of the hollow fibers of the support membrane module was then depressurized to 90 kPaG while the inner surfaces of the hollow fibers were wetted with the first solution, and the depressurized state was maintained for 1 minute. Air was then circulated through the space on the inside of the hollow fibers for 1 minute to remove the excess first solution.

Next, an n-hexane solution (second solution) comprising 0.20 weight% trimesoyl chloride (TMC) was passed through the space on the inside of the hollow fibers of the support membrane module for two (2) minutes at a flow rate of 40 mL/min for interfacial polymerization, to form a polyamide layer on the inner surfaces of the hollow fibers.

After then passing nitrogen through the space on the inside of the hollow fibers for 1 minute to remove the excess second solution, water was passed through the space on the inside of the hollow fibers for 20 minutes at 70°C for washing of the inner surfaces of the hollow fibers.

The module was placed in an autoclave (SX-500 by Tomy Seiko Co., Ltd.) while the two liquid outlet/inlet ports were in the open state. Superheated steam at 121°C was circulated into the autoclave for 20 minutes for curing of the polyamide layer.

Water was passed through the space on the inside of the hollow fibers of the module for 30 minutes, for washing of the surface of the polyamide layer after moist heat treatment.

This procedure formed a separation function layer composed of a wet heat treated polyamide on the inner surface of the hollow fiber filamentous porous support membrane in the housing, thereby producing a hollow fiber forward osmosis membrane module.

<Evaluation of hollow fiber forward osmosis membrane module>

First, the permeation volume (F) and reverse salt diffusion (R) of an unused hollow fiber forward osmosis membrane module were measured by the method described above to calculate the forward osmosis performance value (F/R) (initial F/R).

Next, a 15 weight% acetonitrile aqueous solution (15% MeCN) as the liquid containing an organic solvent was used for measurement of the permeation volume (F) and reverse salt diffusion (R) after contact between the initial F/R-measured hollow fiber forward osmosis membrane module and a liquid containing an organic solvent, to calculate the forward osmosis performance value (F/R) (organic solvent-contacted F/R).

The module after contact with the liquid containing an organic solvent was subjected to regenerating treatment with superheated steam as the regenerating agent, by the following method.

The module that had been contacted with the liquid containing an organic solvent was placed in an autoclave (SX-500 by Tomy Seiko Co., Ltd.) with the two liquid outlet/inlet ports in the open state. Superheated steam at 121°C was circulated into the autoclave for 1 hour for regenerating treatment. Water at 25°C was then circulated for 30 minutes through the spaces in both the inside and outside of the hollow fibers of the module for washing of both surfaces of the regeneration-treated hollow fibers, thus completing regenerating treatment.

The permeation volume (F) and reverse salt diffusion (R) of the regeneration-treated module were measured by the method described above to calculate the forward osmosis performance value (F/R) (regeneration-treated F/R).

The value of the ratio of the regeneration-treated F/R with respect to the initial F/R value, represented as a percentage, was evaluated as the "performance recovery rate".

The evaluation results are shown in Table 1.

<Example 2>

Evaluation was conducted in the same manner as Example 1 except for using 50% MeCN as the liquid containing an organic solvent.

The evaluation results are shown in Table 1.

<Example 3>

Each forward osmosis membrane housed in a hollow fiber forward osmosis membrane module for Example 3 was a forward osmosis membrane with a polyketone (PK) hollow fiber membrane as the hollow fiber porous support membrane, and having a polyamide separation function layer on the inside surface of the hollow fiber membrane.

For Example 3, a hollow fiber forward osmosis membrane module was produced in the same manner as the previous Example, except that each polyketone (PK) hollow fiber porous support membrane and support membrane module were produced in the following manner.

<Production of hollow fiber porous support membrane>

Polyketone (limiting viscosity: 3.0 dL/g) obtained by complete alternating copolymerization of ethylene and carbon monoxide was added to a 63 weight% resorcin aqueous solution to a polymer concentration of 17 weight%, and the mixture was stirred at 80°C for 2 hours for dissolution and degassing of the polymer, to prepare a transparent homogeneous polymer solution (spinning feed solution). The spinning feed solution at 50°C was filled into a wet hollow fiber spinning machine equipped with a dual spinneret. The spinning feed solution was discharged from the outer spinneret of the dual spinneret while the internal coagulating solution (water) was discharged from the inner spinneret, and these were guided into a coagulating bath filled with a 40 weight% methanol aqueous solution as an external coagulating solution for solidification, to obtain a hollow fiber filamentous porous support membrane.

The outer diameter of the obtained hollow fiber filamentous porous support membrane was 0.60 mm, the inner diameter was 0.35 mm and the membrane thickness was 0.125 mm.

<Production of support membrane module>

After housing 80 of the same hollow fiber filamentous porous support membranes each cut to a length of 120 mm in a 20 mm-diameter synthetic resin cylindrical housing, both ends were anchored with an adhesive without obstructing the hollow sections of the hollow fibers, to produce a support membrane module with an effective length of 80 mm and an effective membrane inner surface area of 0.007 m$^2$.

<Evaluation of hollow fiber forward osmosis membrane module>

Evaluation was conducted in the same manner as Example 1 except for using 50% MeCN as the liquid containing an organic solvent.
The evaluation results are shown in Table 1.

<Example 4>

Each forward osmosis membrane housed in a hollow fiber forward osmosis membrane module for Example 4 was a forward osmosis membrane with a polyethersulfone (PES) hollow fiber membrane as the hollow fiber porous support membrane, and having a polyamide separation function layer on the inside surface of the hollow fiber membrane.
For Example 4, a hollow fiber forward osmosis membrane module was produced in the same manner as the previous Example, except that each polyethersulfone (PES) hollow fiber porous support membrane and support membrane module were produced in the following manner.

<Production of hollow fiber porous support membrane>

The polyethersulfone (PES) used was a mixture of 55 parts by weight of "Ultrason E 2020 P" (trade name of BASF Corp.) and 45 parts by weight of terminal hydroxylated polyethersulfone ("Ultrason E 2020 P SR", trade name of BASF Corp.). The polymer blend was dissolved in N-methyl-2-pyrrolidone (FujiFilm-Wako Pure Chemical Industries) to prepare a polymer solution (spinning feed solution) with a polymer concentration of 18.5 weight%. The spinning feed solution was filled into a wet hollow fiber spinning machine equipped with a dual spinneret. The spinning feed solution was discharged from the outer spinneret of the dual spinneret while the internal coagulating solution (water) was discharged from the inner spinneret, and these were guided into a coagulating bath filled with water as an external coagulating solution for solidification, to obtain a hollow fiber filamentous porous support membrane.
The outer diameter of the obtained hollow fiber filamentous porous support membrane was 1.0 mm, the inner diameter was 0.70 mm and the membrane thickness was 0.15 mm.

<Production of support membrane module>

After housing 115 of the same hollow fiber filamentous porous support membranes each cut to a length of 120 mm in a 20 mm-diameter synthetic resin cylindrical housing, both ends were anchored with an adhesive without obstructing the hollow sections of the hollow fibers, to produce a support membrane module with an effective length of 80 mm and an effective membrane inner surface area of 0.02 m$^2$.

<Evaluation of hollow fiber forward osmosis membrane module>

Evaluation was conducted in the same manner as Example 1 except for using 50% MeCN as the liquid containing an organic solvent.
The evaluation results are shown in Table 1.

<Example 5>

Evaluation was conducted in the same manner as Example 1 except for using EtOH as the liquid containing an organic solvent.
The evaluation results are shown in Table 1.

<Example 6>

Evaluation was conducted in the same manner as Example 1 except that instead of the regenerating treatment with superheated steam, regenerating treatment was carried out using hot water as the regenerating agent, by the following method.

The evaluation results are shown in Table 1.

The procedure for regenerating treatment with hot water was as follows.

Hot water at 85°C was circulated for 0.5 hours at a flow rate of 100 mL/min, in the space on the inside of the hollow fibers of the module that had been contacted with liquid containing an organic solvent, for regenerating treatment. Water at 85°C was then circulated for 30 minutes through the space on the inside of the hollow fibers of the module for washing of the inner surfaces of the hollow fibers after regenerating treatment, thus completing regenerating treatment.

<Examples 7 and 8>

Evaluation was conducted in the same manner as Example 6, except that the types of organic solvent-containing liquid and the hot water temperature and flow time were as shown in Table 1.

The evaluation results are shown in Table 1.

<Comparative Example 1>

Evaluation was conducted in the same manner as Example 6, except that regenerating treatment was carried out using water at 25°C instead of hot water, and with a flow time of 24 hours.

The evaluation results are shown in Table 1.

<Example 9>

Evaluation was conducted in the same manner as Example 3, except that dry air was flowed over the module that had been contacted with toluene as a liquid containing an organic solvent, for drying of the module.

The evaluation results are shown in Table 2.

<Example 10>

Evaluation was conducted in the same manner as Example 9, except that dry air was flowed over the module that had been contacted with ethyl acetate as a liquid containing an organic solvent, for drying of the module.

The evaluation results are shown in Table 2.

<Example 11>

Evaluation was conducted in the same manner as Example 5, except that dry air was flowed over the module that had been contacted with EtOH as a liquid, for drying of the module.

The evaluation results are shown in Table 2.

[Table 1]

Table 1

| | Material of hollow fiber porous support membrane | Organic solvent-containing liquid | Regenerating treatment | | | Forward osmosis performance value (F/R) | | | |
|---|---|---|---|---|---|---|---|---|---|
| | | | Regenerating agent | Treatment temperature | Treatment time | Initial | After contact with organic solvent | After regenerating treatment | Perform-ance recovery rate |
| Example 1 | PSf | 15% MeCN | Superheated steam | 121°C | 1 h | 50.0 | 40.0 | 50.0 | 100% |
| Example 2 | PSf | 50% MeCN | Superheated steam | 121°C | 1 h | 47.6 | 16.7 | 47.6 | 100% |
| Example 3 | PK | 50% MeCN | Superheated steam | 121°C | 1 h | 44.0 | 17.9 | 44.0 | 100% |
| Example 4 | PES | 50% MeCN | Superheated steam | 121°C | 1 h | 43.5 | 12.5 | 41.7 | 96% |
| Example 5 | PSf | EtOH | Superheated steam | 121°C | 1 h | 50.0 | 12.3 | 47.6 | 95% |
| Example 6 | PSf | 15% MeCN | Hot water | 85°C | 1 h | 47.6 | 34.5 | 43.5 | 91% |
| Example 7 | PSf | 50% MeCN | Hot water | 50°C | 1 h | 50.0 | 20.8 | 31.3 | 63% |
| Example 8 | PSf | 50% MeCN | Hot water | 70°C | 1 h | 47.6 | 16.7 | 34.5 | 72% |
| Comp. Ex. 1 | PSf | 50% MeCN | Water | 25°C | 24 h | 47.6 | 17.2 | 17.2 | 36% |

[Table 2]

[Table 2]

Table 2

| | Material of hollow fiber porous support membrane | Organic solvent-containing liquid | Regenerating treatment | | | Forward osmosis performance value (F/R) | | | |
|---|---|---|---|---|---|---|---|---|---|
| | | | Regenerating agent | Treatment temperature (°C) | Treatment time | Initial | After contact with organic solvent | After regenerating treatment | Perform-ance recovery rate |
| Example 9 | PK | Toluene | Hot steam | 121 | 1 h | 50.0 | 25.0 | 47.6 | 95% |
| Example 10 | PK | Ethyl Acetate | Hot steam | 121 | 1 h | 50.0 | 16.7 | 50.0 | 100% |
| Example 11 | PSf | EtOH | Hot steam | 121 | 1 h | 50.0 | 12.0 | 47.6 | 95% |

17

EP 4 631 608 A1

**EP 4 631 608 A1**

Claims

1. A method for regenerating a semi-permeable membrane, wherein:

the semi-permeable membrane has a contact history with a liquid containing an organic solvent, and
the method comprises contacting the semi-permeable membrane with a regenerating agent,
the regenerating agent being selected from among water-containing liquids at 50°C or above and water-containing gases at 80°C or above.

2. The method for regenerating a semi-permeable membrane according to claim 1, wherein the semi-permeable membrane comprises a support membrane and a separation function layer.

3. The method for regenerating a semi-permeable membrane according to claim 2, wherein the separation function layer includes a polyamide.

4. The method for regenerating a semi-permeable membrane according to claim 1 or 2, wherein the semi-permeable membrane is a forward osmosis membrane.

5. The method for regenerating a semi-permeable membrane according to claim 1 or 2, wherein the regenerating agent is steam at 100°C to 140°C.

6. The method for regenerating a semi-permeable membrane according to claim 4, wherein the regenerating agent is steam at 100°C to 140°C.

7. The method for regenerating a semi-permeable membrane according to claim 1 or 2, wherein the regenerating agent is water at 70°C to 100°C.

8. The method for regenerating a semi-permeable membrane according to claim 4, wherein the regenerating agent is water at 70°C to 100°C.

9. The method for regenerating a semi-permeable membrane according to claim 1, wherein the contact time between the semi-permeable membrane and regenerating agent is 2 minutes to 10 hours.

10. The method for regenerating a semi-permeable membrane according to claim 5, wherein the contact time between the semi-permeable membrane and regenerating agent is 2 minutes to 10 hours.

11. The method for regenerating a semi-permeable membrane according to claim 6, wherein the contact time between the semi-permeable membrane and regenerating agent is 2 minutes to 10 hours.

12. The method for regenerating a semi-permeable membrane according to claim 1 or 2, wherein the organic solvent in the liquid is a hydrophilic organic solvent.

13. The method for regenerating a semi-permeable membrane according to claim 12, wherein the liquid is an aqueous solution containing a hydrophilic organic solvent, the concentration of the hydrophilic organic solvent in the liquid being 20% by weight or greater based on the total weight of the liquid.

14. The method for regenerating a semi-permeable membrane according to claim 1 or 2, wherein the method includes contacting the semi-permeable membrane with water at below 50°C before contacting the semi-permeable membrane with the regenerating agent.

15. The method for regenerating a semi-permeable membrane according to claim 1 or 2, wherein the semi-permeable membrane has a contact history with a treatment agent selected from among water-containing liquids at 50°C or above and water-containing gases at 80°C or above, before contact with the liquid.

16. The method for regenerating a semi-permeable membrane according to claim 1 or 2, wherein:

the semi-permeable membrane is a forward osmosis membrane, and
when water is placed on one side of the forward osmosis membrane while a 3.5 weight% aqueous sodium chloride solution is placed on the other side, and forward osmosis treatment is carried out, the forward osmosis performance value (F/R) as the ratio between reverse salt diffusion (R, units: $g/(m^2 \times hr)$) and permeation volume (F, units: $kg/(m^2 \times hr)$) is 0.90 times or less compared to the forward osmosis performance value ($F_0/R_0$) when the semi-permeable membrane does not have a contact history with the liquid.

17. The method for regenerating a semi-permeable membrane according to claim 1 or 2, wherein:

the semi-permeable membrane is a forward osmosis membrane, and
when water is placed on one side of the forward osmosis membrane that has been regenerated by the regeneration method, while a 3.5 weight% aqueous sodium chloride solution is placed on the other side, and forward osmosis treatment is carried out, the forward osmosis performance value (F/R) as the ratio between reverse salt diffusion (R, units: $g/(m^2 \times hr)$) and permeation volume (F, units: $kg/(m^2 \times hr)$) is 0.85 times or greater compared to the forward osmosis performance value ($F_0/R_0$) when the semi-permeable membrane does not have a contact history with the liquid.

## INTERNATIONAL SEARCH REPORT

| International application No. |
| --- |
| **PCT/JP2023/043587** |

| A. | CLASSIFICATION OF SUBJECT MATTER |
| --- | --- |

***B01D 65/00***(2006.01)i; ***B01D 69/02***(2006.01)i; ***B01D 69/10***(2006.01)i; ***B01D 69/12***(2006.01)i; ***B01D 71/56***(2006.01)i
FI: B01D65/00; B01D69/02; B01D69/10; B01D69/12; B01D71/56

According to International Patent Classification (IPC) or to both national classification and IPC

| B. | FIELDS SEARCHED |
| --- | --- |

Minimum documentation searched (classification system followed by classification symbols)

B01D65/00; B01D69/02; B01D69/10; B01D69/12; B01D71/56

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2012/147534 A1 (NGK INSULATORS LTD.) 01 November 2012 (2012-11-01) | 1-2, 5, 7, 9-10, 12-15 |
| | claims, paragraphs [0015]-[0022], [0025]-[0030], [0036]-[0042], [0047], [0051]-[0064] | |
| Y | | 2-8, 10-11, 13-15 |
| A | | 16-17 |
| X | JP 2016-27938 A (NGK INSULATORS LTD.) 25 February 2016 (2016-02-25) | 1-2, 7, 9, 12-13, 15 |
| | claims, paragraphs [0010], [0013]-[0018], [0022]-[0023], [0026], [0031]-[0036], [0047]-[0057] | |
| Y | | 2-8, 10-11, 13-15 |
| A | | 16-17 |
| X | JP 2015-29951 A (AQUA KAGAKU KK) 16 February 2015 (2015-02-16) | 1, 7, 9, 12, 15 |
| | claims, paragraphs [0001]-[0004], [0012], [0018]-[0024], [0027], [0030]-[0043] | |
| Y | | 2-4, 7-8, 13-15 |
| A | | 16-17 |

☑ Further documents are listed in the continuation of Box C.　　☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 January 2024** | **06 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/043587**

## C. DOCUMENTS CONSIDERED TO BE RELEVANT

| Category* | Citation of document, with indication, where appropriate, of the relevant passages | Relevant to claim No. |
|---|---|---|
| X | JP 3-165818 A (ASAHI CHEM IND CO LTD) 17 July 1991 (1991-07-17) claims, p. 1, lower right column, line 13 to p. 12, upper left column, line 15 | 1, 5, 7, 9-10, 15 |
| Y | | 2, 4-8, 10-11, 14-15 |
| A | | 16-17 |
| X | JP 2016-87545 A (KURITA WATER IND LTD) 23 May 2016 (2016-05-23) claims, paragraphs [0002], [0004]-[0007], [0010]-[0019], [0022]-[0045] | 1, 7, 9, 14-15 |
| Y | | 2, 4, 7-8, 14-15 |
| A | | 16-17 |
| Y | JP 2021-146297 A (ASAHI KASEI CORP) 27 September 2021 (2021-09-27) claims, paragraphs [0006], [0012]-[0013], [0019], [0063], [0068], [0076], [0083], [0093] | 3-4, 6, 8, 11 |
| A | | 16-17 |
| A | WO 2020/241860 A1 (ASAHI KASEI CORP) 03 December 2020 (2020-12-03) claims | 16-17 |

Form PCT/ISA/210 (second sheet) (July 2022)

## INTERNATIONAL SEARCH REPORT
### Information on patent family members

International application No.

**PCT/JP2023/043587**

| Patent document cited in search report | | | Publication date (day/month/year) | Patent family member(s) | | | Publication date (day/month/year) |
|---|---|---|---|---|---|---|---|
| WO | 2012/147534 | A1 | 01 November 2012 | US 2014/0048482 A1<br>claims, paragraphs [0021]-[0029], [0032]-[0037], [0043]-[0049], [0054], [0058]-[0072]<br>EP 2703065 A1<br>CN 103501879 A | | | |
| JP | 2016-27938 | A | 25 February 2016 | (Family: none) | | | |
| JP | 2015-29951 | A | 16 February 2015 | (Family: none) | | | |
| JP | 3-165818 | A | 17 July 1991 | (Family: none) | | | |
| JP | 2016-87545 | A | 23 May 2016 | (Family: none) | | | |
| JP | 2021-146297 | A | 27 September 2021 | WO 2021/187438 A1 | | | |
| WO | 2020/241860 | A1 | 03 December 2020 | US 2022/0226778 A1<br>claims<br>EP 3978102 A1<br>CN 113905807 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021187438 A
- JP 2021003663 A
- JP 2012250200 A
- JP 2011161435 A
- JP 2018058018 A